# EUROPEAN PATENT APPLICATION

(11) **EP 4 647 282 A2**
(43) Date of publication of application: **12.11.2025**
(21) Application number: 25157275.6
(22) Date of filing: 11.02.2025
(51) Int. Cl.: B60K 6/52, B60L 58/12, B60L 58/18, B60L 50/15, B60L 50/61

(54) **POWER SYSTEM FOR ELECTRIC VEHICLE AND CONTROL METHOD THEREOF**

(30) Priority: 09.05.2024 CN 202410567828
(71) Applicant: Beijing Zhonghuan Investment Management Co., Ltd., 101116 Beijing (CN)
(72) Inventor: LI, Jingyu, Beijing, 101116 (CN)
(74) Representative: Bayramoglu et al.

(57) **Abstract**

The present disclosure belongs to the technical field of vehicles, and in particular to a power system for an electric vehicle (EV) and a control method thereof. The power system for an EV includes two portions, namely a traction battery pack system and an intelligent power generation system. The traction battery pack system includes a big traction battery pack and a small traction battery pack. The traction battery pack system is configured to supply power to the EV The intelligent power generation system is configured to generate power, thereby directly supplying power to the EV or charging the small traction battery pack. In the present disclosure, the big traction battery pack, the small traction battery pack, and the intelligent power generation system form an innovative power system for the EV, and they can supply power to the drive motor alone or jointly to drive the vehicle. There are seven different working modes. The seven working modes are switched through joint control of a vehicle control unit (VCU)/an electronic control unit (ECU)/a power divider unit (PDU), such that the present disclosure realizes automatic matching and stable transition. The present disclosure has characteristics of high modularization, high integration, and high reliability.

## Description

### TECHNICAL FIELD

The present disclosure relates to the technical field of electric vehicles (EVs), and in particular to a power system for an EV and a control method thereof.

### BACKGROUND TECHNOLOGY

At present, there are two types of EVs in the market: pure EVs and range-extended EVs (REEVs).

The two types of vehicles have shortcomings. Pure EVs are defective for reasons of charge anxiety, range anxiety, etc. REEVs can make use of fuel for power generation without charge anxiety and range anxiety. However, REEVs are charged frequently due to a small battery pack and short pure electric endurance. In response to driving under feeding, REEVs have high fuel consumption and produce loud noise. In response to high-speed driving, REEVs suffer from high fuel consumption, power shortage and sluggish acceleration.

### CONTENT OF THE INVENTION

An objective of the present disclosure is to provide a power system for an EV and a control method thereof, to overcome the defects of the prior art. The present disclosure solves problems of the charge anxiety and range anxiety of the existing pure EVs, and further solves the problems that the existing REEVs are charged frequently, have high fuel consumption and loud noise in response to driving under feeding, and suffer high fuel consumption, power shortage and sluggish acceleration in response to high-speed driving.

The technical solutions for achieving the foregoing objective are as follows:
The present disclosure a power system for an EV, including:
a drive motor configured to drive a vehicle;
an inverter connected to the drive motor;
a first traction battery pack connected to the inverter, and configured to supply power to the drive motor through the inverter;
a second traction battery pack connected to the inverter, and configured to supply power to the drive motor through the inverter; and
an intelligent power generation system connected to the second traction battery pack and the inverter, and configured to charge the second traction battery pack, and/or supply power to the drive motor through the inverter.

As a preferable solution to the power system for an EV provided by the present disclosure, the intelligent power generation system includes a fuel tank, an engine connected to the fuel tank, and a generator connected to the engine;
the fuel tank is configured to supply a fuel to the engine;
the engine is configured to supply kinetic energy to the generator; and
the generator is configured to convert the kinetic energy of the engine into electric energy; and the generator is connected to the second traction battery pack and the inverter, and configured to charge the second traction battery pack, and/or supply power to the drive motor through the inverter.

As a preferable solution to the power system for an EV provided by the present disclosure, the second traction battery pack is preferably a power battery.

As a preferable solution to the power system for an EV provided by the present disclosure, a direct current (DC) charging port and an alternating current (AC) charging port are provided on the first traction battery pack.

As a preferable solution to the power system for an EV provided by the present disclosure, a capacity of the first traction battery pack is greater than a capacity of the second traction battery pack.

As a preferable solution to the power system for an EV provided by the present disclosure, one or two drive motors are provided; and in response to one drive motor, the drive motor is drivingly connected to a front wheel or a rear wheel of the vehicle; and
in response to two drive motors, one of the drive motors is drivingly connected to the front wheel of the vehicle, and the other drive motor is drivingly connected to the rear wheel of the vehicle.

As a preferable solution to the power system for an EV provided by the present disclosure, the power system for an EV further includes a control module, where the control module is connected to the inverter, the first traction battery pack, the second traction battery pack, and the intelligent power generation system in a controlling manner; and
the control module is configured to acquire a state of charge (SOC) of each of the first traction battery pack and the second traction battery pack, and control, according to the acquired SOC, the first traction battery pack, and/or the second traction battery pack, and/or the intelligent power generation system to supply power to the drive motor.

As a preferable solution to the power system for an EV provided by the present disclosure, the control module is configured to set a high-efficiency generating range for the intelligent power generation system, and control, when the intelligent power generation system starts to generate power, the intelligent power generation system to generate the power in the high-efficiency generating range.

As a preferable solution to the power system for an EV provided by the present disclosure, the control module is further configured to select a working mode according to a driving power demand of the vehicle and a driving road condition of the vehicle; there are seven working modes; in response to a first working mode, the first traction battery pack supplies power to the drive motor alone; in response to a second working mode, the second traction battery pack supplies power to the drive motor alone; in response to a third working mode, the intelligent power generation system supplies power to the drive motor alone, and the intelligent power generation system simultaneously charges the second traction battery pack; in response to a fourth working mode, the first traction battery pack and the second traction battery pack are connected in parallel to supply power to the drive motor; in response to a fifth working mode, the first traction battery pack and the intelligent power generation system are connected in parallel to supply power to the drive motor; in response to a sixth working mode, the second traction battery pack and the intelligent power generation system are connected in parallel to supply power to the drive motor; and in response to a seventh working mode, the first traction battery pack, the second traction battery pack, and the intelligent power generation system are connected in parallel to supply power to the drive motor.

As a preferable solution to the power system for an EV provided by the present disclosure, the control module is configured to control the first traction battery pack to supply power to the drive motor, until an electric quantity of the first traction battery pack reaches a preset value.

As a preferable solution to the power system for an EV provided by the present disclosure, in response to downhill driving, deceleration, coasting or parking of the EV, the control module is further configured to convert power feedback energy for braking the EV into electric energy to charge the first traction battery pack and/or the second traction battery pack.

The present disclosure further provides a control method of the power system for an EV, including the following steps:
S1: acquiring an SOC of the first traction battery pack;
S2: determining whether the acquired SOC of the first traction battery pack is greater than a first preset value; if yes, executing a step S3; and if no, executing a step S6;
S3: calculating a maximum output power of the first traction battery pack;
S4: further determining whether the maximum output power of the first traction battery pack is greater than a demanded power; if yes, executing a step S5; and if no, executing a step S13;
S5: allowing the first traction battery pack to supply power to the drive motor alone to drive the vehicle;
S6: acquiring an SOC of the second traction battery pack;
S7: further determining whether the SOC of the second traction battery pack is greater than a second preset value; if yes, executing a step S8; and if no, executing a step S11;
S8: calculating a maximum output power of the second traction battery pack;
S9: further determining whether the maximum output power of the second traction battery pack is greater than the demanded power; if yes, executing a step S10; and if no, executing a step S12;
S10: allowing the second traction battery pack to supply power to the drive motor alone to drive the vehicle;
S11: allowing the intelligent power generation system to supply power to the drive motor alone to drive the vehicle;
S12: connecting the second traction battery pack and the intelligent power generation system in parallel to supply power to the drive motor to drive the vehicle;
S13: acquiring an SOC of the second traction battery pack;
S14: further determining whether the SOC of the second traction battery pack is greater than the second preset value; if yes, executing a step S 15; and if no, executing a step S18;
S15: calculating a maximum output power of the second traction battery pack;
S16: further determining whether the maximum output power of the second traction battery pack is greater than the demanded power; if yes, executing a step S17; and if no, executing a step S19;
S17: connecting the first traction battery pack and the second traction battery pack in parallel to supply power to the drive motor to drive the vehicle;
S18: connecting the first traction battery pack and the intelligent power generation system in parallel to supply power to the drive motor to drive the vehicle; and
S19: connecting the first traction battery pack, the second traction battery pack, and the intelligent power generation system in parallel to supply power to the drive motor to drive the vehicle.

The power system for an EV and the control method thereof provided by the present disclosure have the following beneficial effects:
The first traction battery pack, the second traction battery pack, and the intelligent power generation system not only can supply power to the vehicle alone, but also can be combined freely and connected in parallel to supply power to the vehicle. Therefore, the present disclosure can be adapted to the driving condition of the vehicle, and can further solve the charge anxiety and the range anxiety of the pure EV

In the present disclosure, the first traction battery pack, the second traction battery pack, and the intelligent power generation system form an innovative power system for the EV, and they can supply power to the drive motor alone or jointly to drive the EV

The present disclosure has characteristics of high modularization, high integration, and high reliability.

With a plurality of working modes, the present disclosure can realize automatic matching and stable transition according to a road condition and a power demand in driving.

The second traction battery pack is preferably the power battery, and is charged through the intelligent power generation system. Without an external charging port, the second traction battery pack has flash charge and discharge functions.

For the power system provided by the present disclosure, in any case, as long as the big traction battery pack has power, the power is preferentially supplied to the drive motor to drive the vehicle, thereby keeping the intelligent power generation system in a "rest" state as much as possible. This not only can realize energy conservation and emission reduction, but also can lower the use cost of the vehicle.

The first traction battery pack and the second traction battery pack have the energy recovery function, so the present disclosure can prolong the service life of the battery.

### DESCRIPTION OF THE DRAWINGS

FIG. 1 is a principle diagram of a power system for an EV according to the present disclosure; and
FIG. 2 is a flowchart of a control method of a power system for an EV according to the present disclosure.

### SPECIFIC IMPLEMENTATIONS

The present disclosure is further described below with reference to the accompanying drawings and specific embodiments.

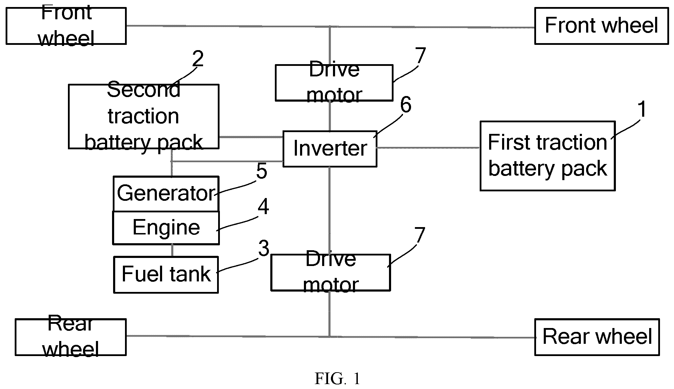

Referring to FIG. 1, the present disclosure provides a power system for an EV and a control method thereof. A first traction battery pack, a second traction battery pack, and an intelligent power generation system are provided for the EV to supply power to the drive motor to drive a vehicle. A capacity of the first traction battery pack is greater than a capacity of the second traction battery pack. The intelligent power generation system not only can supply power to the drive motor, but also can charge the second traction battery pack. The second traction battery pack can only be charged by the intelligent power generation system. The first traction battery pack, the second traction battery pack, and the intelligent power generation system not only can supply power to the vehicle alone, but also can be combined freely and connected in parallel to supply power to the vehicle, thereby adapting to a driving condition of the vehicle. The power system for an EV provided by the present disclosure can solve the charge anxiety and range anxiety of the pure EV well. The power system for an EV and the control method thereof provided by the present disclosure are described below with reference to the accompanying drawings.

FIG. 1 shows a principle diagram of a power system for an EV according to the present disclosure. The power system for an EV provided by the present disclosure is described below with reference to FIG. 1.

As shown in FIG. 1, the power system for an EV provided by the present disclosure includes drive motor 7, inverter 6, first traction battery pack 1, second traction battery pack 2, and an intelligent power generation system. The drive motor 7 is configured to drive the vehicle. The drive motor 7 is drivingly connected to a front wheel and/or a rear wheel of the EV, and can drive the front wheel and/or the rear wheel to rotate. The inverter 6 is connected to the drive motor 7. The first traction battery pack 1, the second traction battery pack 2, and the intelligent power generation system are connected to the inverter 6, and can supply power to the drive motor 7 through the inverter. The intelligent power generation system is further connected to the second traction battery pack 2. The intelligent power generation system can charge the second traction battery pack 2. In this way, the power system for an EV provided by the present disclosure can supply power to the drive motor 7 through the first traction battery pack 1, and/or the second traction battery pack 2, and/or the intelligent power generation system, such that the drive motor 7 drives the vehicle.

Further, as shown in FIG. 1, the intelligent power generation system includes fuel tank 3, engine 4 connected to the fuel tank 3, and generator 5 connected to the engine 4. The fuel tank 3 is configured to supply a fuel to the engine 4. The engine 4 is configured to supply kinetic energy to the generator 5. The generator 5 is configured to convert the kinetic energy of the engine 4 into electric energy. The generator 5 is connected to the second traction battery pack 2 and the inverter 6, and configured to charge the second traction battery pack 2, and/or supply power to the drive motor 7 through the inverter 6.

Further, the fuel stored in the fuel tank 3 may be gasoline, diesel, methanol, a hydrogen fuel, a synthetic biofuel, etc.

Further, the second traction battery pack 2 is preferably a power battery. While the technical requirement is met, there are as few power batteries as possible. The power battery has flash charge and discharge functions. The second traction battery pack 2 is not provided with an external charging port. The second traction battery pack 2 can only be charged by the intelligent power generation system. Preferably, the second traction battery pack 2 is preferably a lithium titanate battery.

Further, a DC charging port and an AC charging port are provided on the first traction battery pack 1. The corresponding charging port can be selected according to an actual need for charging. The first traction battery pack 1 may be charged by a charging pile.

The first traction battery pack 1 includes a plurality of batteries. While a space of the vehicle is allowed, there are as many batteries as possible. The battery in the first traction battery pack 1 may be an energy battery or a power battery. Preferably, the first traction battery pack 1 is selected from a nickel-hydrogen battery, a lithium titanate battery, a lithium manganate battery, a lithium phosphate battery, a ternary lithium battery and the like, and is preferably the lithium titanate battery.

A capacity of the first traction battery pack 1 is greater than a capacity of the second traction battery pack 2. The first traction battery pack 1 may be called a big traction battery pack relative to the second traction battery pack 2. The second traction battery pack 2 may be called a small traction battery pack relative to the first traction battery pack 1. With the small capacity, the small traction battery pack is charged and discharged quickly. The small traction battery pack can be charged quickly within a short time to supply power to the drive motor.

The first traction battery pack and the second traction battery pack are preferably the lithium titanate batteries. The first traction battery pack (the big traction battery pack) can be discharged completely. That is, the electric quantity of the first traction battery pack can be used up. However, other batteries in the prior art have a relatively low usage rate. For example, when the ternary lithium battery is discharged, 20% of the electric quantity cannot be discharged. The ternary lithium battery cannot be charged fully, but is charged to 80%. The fully charged ternary lithium battery will cause a potential safety hazard. Under a same capacity, the first traction battery pack in the present disclosure has a longer driving mileage than the batteries in the prior art.

Further, one or two drive motors 7 are provided. In response to one drive motor 7, the drive motor 7 may be drivingly connected to the front wheel of the vehicle, and may further be drivingly connected to the rear wheel of the vehicle.

In response to two drive motors 7, one of the drive motors is drivingly connected to the front wheel of the vehicle, and the other drive motor is drivingly connected to the rear wheel of the vehicle. In this way, the power system for an EV provided by the present disclosure may realize a two-wheel drive (2WD). That is, one drive motor drives the vehicle, and it may drive the front wheel to rotate, and may also drive the rear wheel to rotate. The power system for an EV may further realize a four-wheel drive (4WD). That is, two drive motors drive the front wheel and the rear wheel simultaneously to rotate.

In a specific implementation of the present disclosure, the power system for an EV provided by the present disclosure further includes a control module, where the control module is connected to the inverter 6, the first traction battery pack 1, the second traction battery pack 2, and the intelligent power generation system in a controlling manner.

The control module is configured to acquire an SOC of each of the first traction battery pack 1 and the second traction battery pack 2, and control, according to the acquired SOC, the first traction battery pack 1, and/or the second traction battery pack 2, and/or the intelligent power generation system to supply power to the drive motor 7.

Further, the control module is a vehicle control unit (VCU). The power system for an EV provided by the present disclosure further includes a battery management system (BMS). The BMS is connected to the first traction battery pack 1 and the second traction battery pack 2, and configured to manage the first traction battery pack 1 and the second traction battery pack 2. The VCU is in communication connection with the BMS through a controller area network (CAN) bus, and can be configured to acquire the SOC of the first traction battery pack 1 and the SOC of the second traction battery pack 2 from the BMS. The VCU can further be configured to send a control instruction to the BMS, so as to control a corresponding battery pack to execute the instruction. The VCU can further be configured to acquire or collect a key start signal, an accelerator pedal signal, a brake pedal signal, and the like through an own input/output (IO) interface.

The power system for an EV provided by the present disclosure further includes an electronic control unit (ECU) connected to the engine 4 in a controlling manner and a generator control unit (GCU) connected to the generator 5 in a controlling manner. The ECU can be configured to control the engine. The GCU can be configured to control the generator. The VCU is in communication connection with the ECU and the GCU through a CAN bus, can be configured to acquire a state of the engine and a state of the generator through the ECU and the GCU, and can further be configured to send a control instruction to the engine and the generator through the ECU and the GCU.

In a specific implementation of the present disclosure, the control module is configured to set a high-efficiency generating range for the intelligent power generation system, and control, when the intelligent power generation system starts to generate power, the intelligent power generation system to generate the power in the high-efficiency generating range.

Preferably, the high-efficiency generating range of the intelligent power generation system may be set according experience, with a power depending on factors such as comprehensive fuel consumption, generator efficiency, and noise, vibration, and harshness (NVH).

In a specific implementation of the present disclosure, the control module is further configured to select a working mode according to a driving power demand of the vehicle and a driving road condition of the vehicle. There are seven working modes. In response to a first working mode, the first traction battery pack supplies power to the drive motor alone. In response to a second working mode, the second traction battery pack supplies power to the drive motor alone. In response to a third working mode, the intelligent power generation system supplies power to the drive motor alone, and the intelligent power generation system simultaneously charges the second traction battery pack. In response to a fourth working mode, the first traction battery pack and the second traction battery pack are connected in parallel to supply power to the drive motor. In response to a fifth working mode, the first traction battery pack and the intelligent power generation system are connected in parallel to supply power to the drive motor. In response to a sixth working mode, the second traction battery pack and the intelligent power generation system are connected in parallel to supply power to the drive motor. In response to a seventh working mode, the first traction battery pack, the second traction battery pack, and the intelligent power generation system are connected in parallel to supply power to the drive motor.

The power system for an EV provided by the present disclosure further includes a power divider unit (PDU). The PDU is provided at the inverter, and configured to realize a power division function.

According to the power system for an EV provided by the present disclosure, the working mode is switched by joint control of the VCU/the ECU/the PDU, and is automatically switched through the driving road condition of the vehicle and the driving demanded power of the vehicle.

Further, the first traction battery pack preferentially supplies power to the vehicle. In any case, as long as the first traction battery pack has power, the power is preferentially supplied to the drive motor to drive the vehicle. The first traction battery pack is charged with an external power source for energy supplementation. Specifically, the control module is configured to preferentially acquire the SOC of the first traction battery pack 1, and determine whether the first traction battery pack 1 has power through the acquired SOC of the first traction battery pack 1, thereby determining whether the first traction battery pack is used to supply power.

Further, the intelligent power generation system is started only when the first traction battery pack and the second traction battery pack do not have power, and external charging is not convenient or according to the road condition. The intelligent power generation system supplies power to the drive motor to drive the vehicle, or the intelligent power generation system charges the second traction battery pack.

Through the joint control of the VCU/the ECU/the PDU, according to the driving demand of the vehicle, such as the driving road condition of the vehicle and the driving demanded power of the vehicle, the present disclosure supplies the power to the EV to drive the EV When the first traction battery pack has power, the first traction battery pack is used preferentially to supply power to the drive motor alone through the inverter to drive the vehicle. Further, when the first traction battery pack has power and the second traction battery pack also has power, both the first traction battery pack and the second traction battery pack may be used simultaneously to supply power to the drive motor through the inverter to drive the vehicle. Further, when the second traction battery pack has power, the second traction battery pack may be used to supply power to the drive motor alone through the inverter to drive the vehicle. Further, when the first traction battery pack does not have power and the second traction battery pack has power shortage, the intelligent power generation system is used to generate power, thereby supplying power to the drive motor through the inverter to drive the vehicle, and also simultaneously charging the second traction battery pack. Further, when the second traction battery pack has power, according to a driving road condition, the second traction battery pack may be used with the intelligent power generation system to supply power to the drive motor through the inverter to drive the vehicle. Further, when the second traction battery pack does not have power and the first traction battery pack has power, according to the driving road condition, the intelligent power generation system may be used to generate power, thereby supplying power to the drive motor through the inverter together with the first traction battery pack to drive the vehicle.

In a specific implementation of the present disclosure, the control module is configured to control the first traction battery pack 1 to supply power to the drive motor 7, until an electric quantity of the first traction battery pack 1 reaches a preset value.

Through the preset value, a certain electric quantity is kept by the first traction battery pack 1, so as to ensure the power demand of the power system for the EV For example, the power is supplied to the control module, such that the control module can operate to switch the working mode.

In a specific implementation of the present disclosure, in response to downhill driving, deceleration, coasting or parking of the EV, the control module is further configured to convert power feedback energy for braking the EV into electric energy to charge the first traction battery pack and/or the second traction battery pack.

In response to the deceleration of the EV, the drive motor stops to work. At this time, a rotor of the motor still rotates, such that the motor generates a back electromotive force (BEMF). With the BEMF, the battery is charged reversely.

The present disclosure further provides a control method of the power system for an EV The control method is described below.

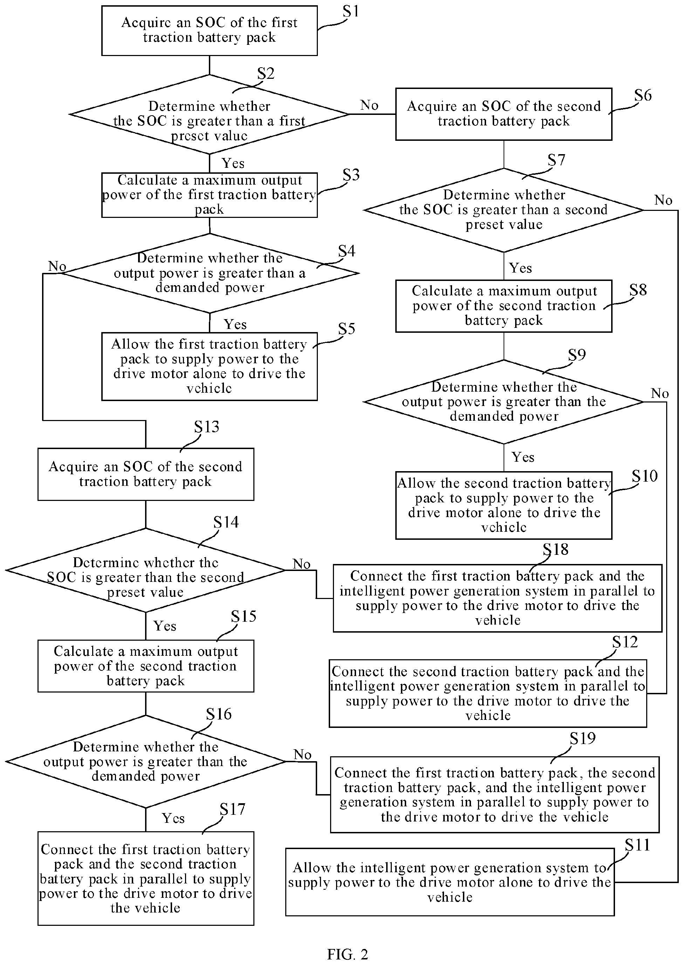

As shown in FIG. 2, the control method provided by the present disclosure includes the following steps:
Step S1: An SOC of the first traction battery pack is acquired. Step S2 is then executed.
Step S2: Whether the acquired SOC of the first traction battery pack is greater than a first preset value is determined. If yes, Step S3 is executed. If no, Step S6 is executed.
Step S3: A maximum output power of the first traction battery pack is calculated. Step S4 is then executed.
Step S4: Whether the maximum output power of the first traction battery pack is greater than a demanded power is further determined. If yes, Step S5 is executed. If no, Step S13 is executed. The demanded power in Step S4 is the driving demanded power of the vehicle.
Step S5: The first traction battery pack supplies power to the drive motor alone to drive the vehicle.
Step S6: An SOC of the second traction battery pack is acquired. Step S7 is then executed.
Step S7: Whether the SOC of the second traction battery pack is greater than a second preset value is further determined. If yes, Step S8 is executed. If no, Step S11 is executed.
Step S8: A maximum output power of the second traction battery pack is calculated. Step S9 is then executed.
Step S9: Whether the maximum output power of the second traction battery pack is greater than the demanded power is further determined. If yes, Step S10 is executed. If no, Step S12 is executed. The demanded power in Step S9 is the driving demanded power of the vehicle.
Step S10: The second traction battery pack supplies power to the drive motor alone to drive the vehicle.
Step S11: The intelligent power generation system supplies power to the drive motor alone to drive the vehicle.
Step S12: The second traction battery pack and the intelligent power generation system are connected in parallel to supply power to the drive motor to drive the vehicle.
Step S13: An SOC of the second traction battery pack is acquired. Step S14 is then executed.
Step S14: Whether the SOC of the second traction battery pack is greater than the second preset value is further determined. If yes, Step S15 is executed. If no, Step S18 is executed.
Step S15: A maximum output power of the second traction battery pack is calculated. Step S16 is then executed.
Step S16: Whether the maximum output power of the second traction battery pack is greater than the demanded power is further determined. If yes, Step S17 is executed. If no, Step S19 is executed. The demanded power in Step S16 is the driving demanded power of the vehicle.
Step S17: The first traction battery pack and the second traction battery pack are connected in parallel to supply power to the drive motor to drive the vehicle.
Step S18: The first traction battery pack and the intelligent power generation system are connected in parallel to supply power to the drive motor to drive the vehicle.
Step S19: The first traction battery pack, the second traction battery pack, and the intelligent power generation system are connected in parallel to supply power to the drive motor to drive the vehicle.

The power system for an EV provided by the present disclosure has the following beneficial effects:
In the present disclosure, the first traction battery pack, the second traction battery pack, and the intelligent power generation system form an innovative power system for the EV, and they can supply power to the drive motor alone or jointly to drive the EV

The present disclosure has characteristics of high modularization, high integration, and high reliability.

With a plurality of working modes, the present disclosure can realize automatic matching and stable transition according to a road condition and a power demand in driving.

The first traction battery pack, the second traction battery pack, and the intelligent power generation system not only can supply power to the vehicle alone, but also can be combined freely and connected in parallel to supply power to the vehicle. Therefore, the present disclosure can be adapted to the driving condition of the vehicle, and can further solve the charge anxiety and range anxiety of the vehicle.

The present disclosure has been described in detail above with reference to the accompanying drawings and embodiments, and those skilled in the art can make various modifications to the present disclosure according to the above description. Therefore, some details in the embodiments should not be construed as limiting the present disclosure, and the present disclosure will take the scope defined by the appended claims as the protection scope of the present disclosure.

## Claims

1. A power system for an electric vehicle (EV), **characterized by** comprising:
a drive motor (7) configured to drive a vehicle;
an inverter (6) connected to the drive motor (7);
a first traction battery pack (1) connected to the inverter (6), and configured to supply power to the drive motor (7) through the inverter (6);
a second traction battery pack (2) connected to the inverter (6), and configured to supply power to the drive motor (7) through the inverter (6); and
an intelligent power generation system connected to the second traction battery pack (2) and the inverter (6), and configured to charge the second traction battery pack (2), and/or supply power to the drive motor (7) through the inverter (6);
wherein when the first traction battery pack (1) has power, the first traction battery pack (1) is used preferentially to supply power to the drive motor (7) alone through the inverter (6) to drive the vehicle;
further, when the first traction battery pack (1) has power and the second traction battery pack (2) also has power, both the first traction battery pack (1) and the second traction battery pack (2) are used simultaneously to supply power to the drive motor (7) through the inverter (6) to drive the vehicle;
further, when the second traction battery pack (2) has power, the second traction battery pack (2) is used to supply power to the drive motor (7) alone through the inverter (6) to drive the vehicle;
further, when the first traction battery pack (1) does not have power and the second traction battery pack (2) has power shortage, the intelligent power generation system is used to generate power, thereby supplying power to the drive motor (7) through the inverter (6) to drive the vehicle, and also simultaneously charging the second traction battery pack (2);
further, when the second traction battery pack (2) has power, according to a driving road condition, the second traction battery pack (2) is used with the intelligent power generation system to supply power to the drive motor (7) through the inverter (6) to drive the vehicle; and
further, when the second traction battery pack (2) does not have power and the first traction battery pack (1) has power, according to the driving road condition, the intelligent power generation system is used to generate power, thereby supplying power to the drive motor (7) through the inverter (6) together with the first traction battery pack (1) to drive the vehicle.

2. The power system for the EV according to claim 1, **characterized in that** the intelligent power generation system comprises a fuel tank (3), an engine (4) connected to the fuel tank (3), and a generator (5) connected to the engine (4);
the fuel tank (3) is configured to supply a fuel to the engine (4);
the engine (4) is configured to supply kinetic energy to the generator (5); and
the generator (5) is configured to convert the kinetic energy of the engine (4) into electric energy; and the generator (5) is connected to the second traction battery pack (2) and the inverter (6), and configured to charge the second traction battery pack (2), and/or supply power to the drive motor (7) through the inverter (6).

3. The power system for the EV according to claim 1, **characterized in that** the second traction battery pack (2) is preferably a power battery.

4. The power system for the EV according to claim 1, **characterized in that** a direct current (DC) charging port and an alternating current (AC) charging port are provided on the first traction battery pack (1).

5. The power system for the EV according to claim 1, **characterized in that** a capacity of the first traction battery pack (1) is greater than a capacity of the second traction battery pack (2).

6. The power system for the EV according to claim 1, **characterized in that** one or two drive motors (7) are provided; and in response to one drive motor (7), the drive motor (7) is drivingly connected to a front wheel or a rear wheel of the vehicle; and
in response to two drive motors (7), one of the drive motors (7) is drivingly connected to the front wheel of the vehicle, and the other drive motor (7) is drivingly connected to the rear wheel of the vehicle.

7. The power system for the EV according to claim 1, **characterized by** further comprising a control module, wherein the control module is connected to the inverter (6), the first traction battery pack (1), the second traction battery pack (2), and the intelligent power generation system in a controlling manner, wherein
the control module is configured to acquire a state of charge (SOC) of each of the first traction battery pack (1) and the second traction battery pack (2), and control, according to the acquired SOC, the first traction battery pack (1), and/or the second traction battery pack (2), and/or the intelligent power generation system to supply power to the drive motor (7).

8. The power system for the EV according to claim 7, **characterized in that** the control module is configured to set a high-efficiency generating range for the intelligent power generation system, and control, when the intelligent power generation system starts to generate power, the intelligent power generation system to generate the power in the high-efficiency generating range.

9. The power system for the EV according to claim 7, **characterized in that** the control module is further configured to select a working mode according to a driving power demand of the vehicle and a driving road condition of the vehicle; there are seven working modes; in response to a first working mode, the first traction battery pack (1) supplies power to the drive motor (7) alone; in response to a second working mode, the second traction battery pack (2) supplies power to the drive motor (7) alone; in response to a third working mode, the intelligent power generation system supplies power to the drive motor (7) alone, and the intelligent power generation system simultaneously charges the second traction battery pack (2); in response to a fourth working mode, the first traction battery pack (1) and the second traction battery pack (2) are connected in parallel to supply power to the drive motor (7); in response to a fifth working mode, the first traction battery pack (1) and the intelligent power generation system are connected in parallel to supply power to the drive motor (7); in response to a sixth working mode, the second traction battery pack (2) and the intelligent power generation system are connected in parallel to supply power to the drive motor (7); and in response to a seventh working mode, the first traction battery pack (1), the second traction battery pack (2), and the intelligent power generation system are connected in parallel to supply power to the drive motor (7).

10. The power system for the EV according to claim 7, **characterized in that** the control module is configured to control the first traction battery pack (1) to supply power to the drive motor (7), until an electric quantity of the first traction battery pack (1) reaches a preset value.

11. The power system for the EV according to claim 7, **characterized in that** in response to downhill driving, deceleration, coasting or parking of the EV, the control module is further configured to convert power feedback energy for braking the EV into electric energy to charge the first traction battery pack (1) and/or the second traction battery pack (2).

12. A control method of the power system for the EV according to any one of claims 1 to 11, **characterized by** comprising the following steps:
S1: acquiring an SOC of the first traction battery pack (1);
S2: determining whether the acquired SOC of the first traction battery pack (1) is greater than a first preset value; if yes, executing a step S3; and if no, executing a step S6;
S3: calculating a maximum output power of the first traction battery pack (1);
S4: further determining whether the maximum output power of the first traction battery pack (1) is greater than a demanded power; if yes, executing a step S5; and if no, executing a step S13;
S5: allowing the first traction battery pack (1) to supply power to the drive motor (7) alone to drive the vehicle;
S6: acquiring an SOC of the second traction battery pack (2);
S7: further determining whether the SOC of the second traction battery pack (2) is greater than a second preset value; if yes, executing a step S8; and if no, executing a step S11;
S8: calculating a maximum output power of the second traction battery pack (2);
S9: further determining whether the maximum output power of the second traction battery pack (2) is greater than the demanded power; if yes, executing a step S10; and if no, executing a step S12;
S10: allowing the second traction battery pack (2) to supply power to the drive motor (7) alone to drive the vehicle;
S 11: allowing the intelligent power generation system to supply power to the drive motor (7) alone to drive the vehicle;
S12: connecting the second traction battery pack (2) and the intelligent power generation system in parallel to supply power to the drive motor (7) to drive the vehicle;
S13: acquiring an SOC of the second traction battery pack (2);
S14: further determining whether the SOC of the second traction battery pack (2) is greater than the second preset value; if yes, executing a step S15; and if no, executing a step S18;
S15: calculating a maximum output power of the second traction battery pack (2);
S16: further determining whether the maximum output power of the second traction battery pack (2) is greater than the demanded power; if yes, executing a step S17; and if no, executing a step S19;
S17: connecting the first traction battery pack (1) and the second traction battery pack (2) in parallel to supply power to the drive motor (7) to drive the vehicle;
S18: connecting the first traction battery pack (1) and the intelligent power generation system in parallel to supply power to the drive motor (7) to drive the vehicle; and
S19: connecting the first traction battery pack (1), the second traction battery pack (2), and the intelligent power generation system in parallel to supply power to the drive motor (7) to drive the vehicle.
